## Europäisches Patentamt

## European Patent Office

## Office européen des brevets

(19)

(11) Veröffentlichungsnummer: **0 169 523**
**B1**

(12) **EUROPÄISCHE PATENTSCHRIFT**

(45) Veröffentlichungstag der Patentschrift:
**24.05.89**

(51) Int. Cl.⁴: **G 11 B 5/702**

(21) Anmeldenummer: **85109122.3**

(22) Anmeldetag: **22.07.85**

(54) Verfahren zur Herstellung schichtförmiger magnetischer Aufzeichnungsträger.

(30) Priorität: **27.07.84 DE 3427685**

(43) Veröffentlichungstag der Anmeldung:
**29.01.86 Patentblatt 86/5**

(45) Bekanntmachung des Hinweises auf die Patenterteilung:
**24.05.89 Patentblatt 89/21**

(84) Benannte Vertragsstaaten:
**DE FR GB NL**

(56) Entgegenhaltungen:
**EP-A- 0 033 900**
**DE-A- 3 005 036**

(73) Patentinhaber: **BASF Aktiengesellschaft,
Carl-Bosch-Strasse 38, D-6700 Ludwigshafen (DE)**

(72) Erfinder: **Lehner, August, Wachenheimer Strasse 4,
D-6701 Roedersheim-Gronau (DE)**
Erfinder: **Balz, Werner, Dr., Kropsburgstrasse 44,
D-6703 Limburgerhof (DE)**
Erfinder: **Lenz, Werner, Dr.,
Heinrich-Baermann-Strasse 14, D-6702 Bad Duerkheim
(DE)**
Erfinder: **Kohl, Albert, Schloss-Strasse 26,
D-6711 Laumersheim (DE)**
Erfinder: **Heil, Guenter, Dr., Dirmsteiner Weg 41,
D-6700 Ludwigshafen (DE)**

## Beschreibung

Die Erfindung betrifft ein Verfahren zur Herstellung von schichtförmigen magnetischen Aufzeichnungsträgern, bestehend aus einem nichtmagnetischen Trägermaterial und darauf aufbracht mindestens einer magnetisierbaren Schicht aus in einem organischen Bindemittel feinverteiltem anisotropen magnetischen Material unter Einsatz einer strahlungshärtbaren wässrigen Bindemitteldispersion.

Durch die Entwicklung auf dem Gebiet der magnetischen Ton-, Bild- und Datenspeicherung werden immer höhere Anforderungen an die magnetischen Aufzeichnungsträger gestellt, während gleichzeitig die angestrebte breite Nutzung dieser Technik ständige Steigerungen bezüglich der Zuverlässigkeit dieser Medien fordert. So erfordern höhere Aufzeichnungsdichten bei allen genannten Anwendungsformen häufig die Herstellung dünnerer Magnetschichten. Aus diesem Grunde müssen sowohl die Packungsdichte des magnetischen Materials in der Magnetschicht, die remanente Magnetisierung in Aufzeichnungsrichtung, die gleichmässige Verteilung des magnetischen Materials in der Schicht sowie die Oberflächenglätte und die Gleichmässigkeit der Schicht verbessert werden. Alle diese Anforderungen, die bei erhöhter Aufzeichnungdichte hinsichtlich Fehlerfreiheit und Pegelkonstanz an die Magnetschicht gestellt werden, lassen sich in hohem Masse von der Art des verwendeten Bindemittels beeinflussen. Wichtig ist, dasss das Bindemittel das magnetische Material gut benetzt, damit eine homogene Verteilung in der Schicht erreicht wird, dass es einen guten Verlauf und eine gute Filmbildung aufweist, damit die Magnetschicht eine einwandfreie Oberfläche erhält und dass es der Magnetschicht die der Beanspruchung entsprechende mechanische Stabilität verleiht.

Um derartige magnetische Aufzeichnungsträger herzustellen, wurden bisher die das magnetische Material enthaltenden Schichten vorwiegend mit Hilfe hochpolymerer, lösungsmittelhaltiger, physikalisch trocknender oder chemisch vernetzbarer Bindemittel oder Bindemittelgemische hergestellt. Dabei kamen Lösungsmittel wie zum Beispiel Methylethylketon, Methylisobutylketon, Ethyl- und Butylacetat, Methanol, Ethanol, Propanol, Butanol, Toluol, Xylol, Tetrahydrofuran und Dioxan zum Einsatz. Von Nachteil sind dabei die nicht umweltfreundlichen Eigenschaften, vor allem Feuergefährlichkeit und Toxizität dieser Lösungsmittel sowie der relativ hohe Preis. Aus diesen Gründen wurde es schon seit langem als erforderlich angesehen, in geschlossenen Systemen zu arbeiten und das Lösungsmittel über eine zusätzlich zu installierende Rückgewinnungsanlage im Kreislauf zu benutzen.

Da die physikalisch trocknenden Bindemittel nicht mehr in ausreichendem Masse den Anforderungen, die an hochwertige Aufzeichnungsträger gestellt werden, genügen, wurde auch schon die Vernetzung hochmolekularer thermoplastischer Bindemittel beispielsweise mit Polyisocyanaten vorgeschlagen. Die Nachteile bei einem solchen Vorgehen bestehen darin, dass die Vernetzungsreaktionen sehr empfindlich auf Temperatureinflüsse und Feuchtigkeitsgehalte reagieren und diese Art von Vernetzung eine genaue Dosierung der Komponenten erfordern. Da bei dieser Verfahrensweise zudem das Vernetzungsmittel mit allen seien unerwünschten Nebenwirkungen in der Magnetschicht verbleibt, wurde auch versucht, strahlungshärtende Bindemittel einzusetzen, wie z.B. Butadien-Acrylonitril (US-PS 3 104 983) oder Mischungen aus hochmolekularen thermoplastischen Polymeren und polyfunktionale Acrylat-Prepolymere (WO 82/01099). Von Nachteil ist hierbei auch der Einsatz von organischen Lösungsmitteln.

Andererseits wurde schon vorgeschlagen, wässrige Polymerdispersionen bei der Herstellung der für die Fertigung von magnetischen Aufzeichnungsträgern geeigneten Dispersionen der magnetischen Materialien einzusetzen. So beschreiben die DE-OS 25 13 421 und DE-OS 25 13 422 wässrige Polymerdispersionen auf der Basis vernetzungfähiger Vinylacetat- oder Acrylat-Polymerer und Melamin/Formaldehyd. Die bei der Herstellung dieser Dispersionen benötigten Hilfsstoffe, wie Schutzkolloide, Verdickungsmittel oder Emulgatoren, führen jedoch bei der Herstellung der Dispersionen der magnetischen Materialien zu Schaumbildung und zu magnetischen Schichten mit erhöhter Schmierneigung. Auch gemäss der DD-PS 116 963 werden Magnetschichten mit wässrigen Dispersionen hergestellt. Die dabei eingesetzten Bindemittel ergeben jedoch Schichten, welche gegen Feuchtigkeit empfindlich sind, zum Kleben und Schmieren neigen und wenig abriebfeste Oberflächen ergeben. Der Einsatz von vernetzten kationischen Polyurethanen zur Beschichtung von Leder und Textil und auch für die Herstellung von Magnetschichten wird in der DD-PS 116 248 vorgeschlagen. Dabei ist jedoch von Nachteil, dass bereits geringe pH-Unterschiede zwischen magnetischem Material und Bindemittel das genannte Polyurethan vernetzen oder zum Teil koagulieren lassen, wodurch die Verarbeitbarkeit der Magnetdispersion und die Qualität des Aufzeichnungsträgers beeinträchtigt werden.

Aufgabe der Erfindung war es daher, aufgrund der bekannten Vorteile wässriger Polymerdispersionen, schichtförmige magnetische Aufzeichnungsträger mit Hilfe strahlungshärtbarer wässriger Bindemittel herzustellen, wobei die geschilderten Nachteile nicht auftreten, d.h. die Aufzeichnungsträger nicht feuchtigkeitsempfindlich sind, nicht zum Verkleben neigen, einen geringen Schichtabrieb aufweisen und eine ausgeprägt glatte Oberfläche bei günstigem Fehlerverhalten zeigen.

Es wurde nun gefunden, dass sich schichtförmige magnetische Aufzeichnungsträger durch Dispersionen eines feinteiligen magnetisch anisotropen Materials in einem Bindemittel, das zu mindestens 40% aus einer strahlungshärtbaren wässrigen Bindemitteldispersion besteht, Auftragen der Dispersion auf ein nichtmagnetisches Trägermaterial, Ausrichten des magnetisch anisotropen Materials und Trocknen und Vernetzen der aufgetragenen Schicht gemäs der Aufgabe herstellen lassen, wenn die strahlungshärtbare wässrige Bindemitteldispersion im wesentlichen besteht aus

(A) 5 bis 80 Gew.-% Wasser und

(B) 95 bis 20 Gew.-% eines in (A) dispergierten polymerisierbaren Thioetheraddukts eines polymerisierbaren Oligo- oder Polymeren, das ein mittleres Molekulargewicht von mindestens 350, einen Salzgruppengehalt von 0,4 bis 12% und einen Gehalt von 0,01 bis 0,8 Mol polymerisierbarer C–C-Doppelbindungen pro 100 g Oligo- bzw. Polymer aufweist, wobei der vernetzte unpigmetierte Polymerfilm eine Dehnung von grösser 10%, eine Reisskraft von grösser 10 N/mm² und einen E-Modul von grösser 100 N/mm² aufweist.

Das polymerisierbare Bindemittel (B) wird im allgemeinen durch Addition von Mercaptocarbonsäuren an nicht wasserlösliche polymerisierbare Oligo- oder Polymere, die mindestens zwei C–C-Doppelbindungen pro Molekül enthalten, erhalten.

Bevorzugt strahlungshärtbare Oligo- oder Polymere sind polymerisierbare C–C-Doppelbindungen enthaltende Polyester mit einer Säurezahl von höchstens 10, polymerisierbare C–C-Doppelbindungen enthaltende Polyether, hydroxylgruppenhaltige Umsetzungsprodukte aus einem mindestens zwei Epoxidgruppen pro Molekül enthaltenden Polyepoxid mit mindestens eine α- und/oder β-ethlenisch ungesättigten Carbonsäure, Polyurethan(meth)-acrylate sowei α- und/oder β-ethylenisch ungesättigte Acylreste enthaltende Acrylcopolymere.

Die Herstellung dieser strahlungshärtbaren wässrigen Bindemitteldispersionen ist an sich bekannt (DE-OS 30 05 036).

Geeignete Ausgangsstoffe für den Aufbau der strahlunghärtbaren wässrigen Bindemitteldispersionen sind:

(A) Die Komponente (A) ist Wasser, das in einer Konzentration von 5 bis 80, vorzugsweise 20 bis 80 Gew.-%, vorliegt.

(B) Die Komponente (B) ist ein Thioetheraddukt mit einem Gehalt von 0,01 bis 0,8, vorzugsweise 0,04 bis 0,6 Mol pro 100 g Substanz an polymerisierbaren Doppelbindungen und einem mittleren Molekulargewicht von mindestens 350. Das dem Thioetheraddukt zugrundeliegende strahlungshärtbare Oligo- oder Prepolymer kann z. B. sein

1. ein Polyester mit einer Säurezahl von höchstens 10 aus aliphatischen und/oder aromatischen Dicarbonsäuren, wie Bernsteinsäure, Glutarsäure, Adipinsäure, Pimelinsäure, Korksäure, Azelainsäure, Sebacinsäure, Cyclohexandicarbonsäure, Phthalsäure, Isophthalsäure, Terephthalsäure, Maleinsäure, Fumarsäure, Itakonsäure bzw. deren veresterbaren Derivate, und mehrwertigen Alkoholen, wie Ethlyenglykol, Polyethylenglykole, Propylenglykol, Polypropylenglykole, Butandiol, Hexandiol, Neopentylglykol, Hydroxypivalinsäureneopentylglykolester, Trimethylolpropan, Glycerin, Pentaerythrit und/oder Trishydroxyethylisocyanurat sowie α- und/oder β-ethylenisch ungesättigten Monocarbonsäuren, beispielsweise Acrylsäure, Methacrylsäure, Crotonsäure, Zimtsäure und/oder Dicarbonsäurehalbester von Monoalkanolen, wie Malein-, Fumarund Itakonsäurehalbester mit $C_1$- bis $C_4$-Monoalkoholen, wobei Acrylsäure und Methacrylsäure bevorzugt sind, welcher nach den üblichen Verfahren in einem Schritt oder auch stufenweise hergestellt werden kann,

2. ein aliphatischer oder araliphatischer Polyether, welcher durch Umsetzung von zwei- und/oder mehrwertigen Alkoholen, wie sie auch unter 1) genannt sind, mit verschiedenen Mengen an Ethylen- und/oder Propylenoxid erhalten wird und dessen freie Hydroxylgruppe ganz oder teilweise mit ethylenisch ungesättigten Alkoholen, beispielsweise Allylalkohol, Methallylalkohol, Crotylalkohol, Zimtalkohol, verethert und/oder mit α- und/oder β-ethylenisch ungesättigten Monocarbonsäuren, wie sie auch unter 1) genannt sind, verestert ist,

3. eine ungesättigte hydroxylgruppenhaltige Verbindung, die durch Umsetzung eines Polyepoxids mit durchschnittlich mindestens 2 Epoxidgruppen pro Molekül, beispielsweise Polyglycidylether mehrwertiger Alkohole, wie sie auch unter 1) genannt sind, Polyglycidylether mehrwertiger Phenole, wie Bisphenol-A, Glycidylester mehrwertiger Carbonsäuren, wie sie auch unter 1) genannt sind, andere Glycidylverbindungen, beispielsweise Triglycidylisocyanurat und/oder epoxidierte natürliche oder synthetisch Öle mit α- und/oder β-ethylenisch ungesättigten Carbonsäuren, wie sie auch unter 1) genannt sind, hergestellt werden kann,

4. ein gegebenenfalls Harnstoffgruppen enthaltendes Polyurethan, das aus aliphatischen und/oder aromatischen Polyisocyanaten, beispielsweise Tetramethylendiisocyanat, Hexamethylendiisocyanat, Isophorondiisocyanat, Diphenylmethandiisocyanat, Tolylendiisocyanat, Naphthylendiisocyanat, 4,4′-Diphenyletherdiisocanat, gegebenenfalls daraus hervorgehende Di- oder Trimere sowie deren Umsetzungsprodukte mit untergeordneten Mengen wasserstoffaktiver Verbindungen, wie z. B. mehrwertigen Alkoholen, wie sie auch unter 1) genannt sind, polyfunktionellen Aminen und/oder Aminoalkoholen, durch Umsetzung mit hydroxylgruppenhaltigen (Meth)-acrylsäureestern, wie Hydroxyethyl(meth)-acrylat, Hydroxypropyl(meth)-acrylat und/oder Butandiolmono(meth)-acrylat, hergestellt werden kann,

5. ein Polymeres, das durch Einführung von α- und/oder β-ethylenisch ungesättigten Acrylestern, die sich beispielsweise von den unter 1) genannten α- und/oder β-ethylenisch ungesättigten Monocarbonsäuren ableiten, in durch gewöhnliche Lösungspolymerisation hergestellte Acrylatcopolymere, Styrol/Acrylat-Copolymere oder dergleichen, mit einem Gehalt von mindestens 0,02 Mol Hydroxyl-, Carboxyl- und/oder Epoxygruppen pro 100 g Substanz, erhalten werden kann,

6. ein Polyurethan (Harnstoff), das aus Polyisocyanaten, organischen Polyhydroxyverbindungen mit einem Molekulargewicht zwischen 400 und 5000, Acrylatdiolen mit Molekulargewichten zwischen 146 und 3000 und gegebenenfalls Diolen oder Triolen mit einem Molekulargewicht zwischen 62 und 400 bei einem NCO/OH-Verhältnis zwischen 0,5:1 und 1,3:1 hergestellt wird.

Desgleichen eignen sich auch Gemische der unter (1) bis (6) genannten Oligo- und Polymeren (Präpolymeren).

Die Herstellung der Komponente (B) aus den strahlungshärtbaren Oligo- oder Polymeren erfolgt dadurch, dass man diese mit mercaptogruppenhaltigen Carbonsäuren oder deren Salzen oder Gemischen davon zur Umsetzung bringt. Diese Reaktion wird bei 0 bis 120°C, bevorzugt bei 20 bis 100°C, durchgeführt. Sie kann durch Verrühren der reinen Komponenten oder in Gegenwart von Lösungsmitteln, wie z.B. Aceton oder Tetrahydrofuran erfolgen.

Als Mercaptocarbonsäuren eignen sich alle Carbonsäuren, die eine Mercaptogruppe tragen. Besonders geeignet sind Mercaptosäuren, bei denen die Mercaptogruppe in $\alpha$- oder $\beta$-Stellung zur Säuregruppe steht. Die Mercaptosäuren können aliphatisch, cycloaliphatisch, araliphatisch oder aromatisch sein, z.B. Mercaptoessigsäure, Mercaptopropionsäure, Mercaptobuttersäure, Mercaptoisobuttersäure, Mercaptolinolsäure, Mercaptotrimethylessigsäure, Mercaptocyclohexansäure, Mercaptophenylessigsäure, Mercaptobenzoesäure, Mercaptotoluylensäure, Mercaptochlorbenzolsäure. Ebenfalls geeignet sind Umsetzungsprodukte von Mercaptoethanol mit Poly- oder Dicarbonsäureanhydriden, z.B. mit Bernsteinsäureanhydrid, Maleinsäureanhydrid, Phthalsäureanhydrid oder Trimellithsäureanhydrid, wenn dadurch die SH-Gruppe frei bleibt. Besonders bevorzugt ist Mercaptoessigsäure.

Zur Überführung der Mercaptocarbonsäuren in ihre Salzform sind geeignete Verbindungen z.B.:

1. organische Basen wie monofunktionelle primäre, sekundäre oder tertiäre Amine, wie z.B. Methylamin, Diethylamin, Trimethylamin, Triethylamin, Ethylamin, Tributylamin, Pyridin, Methylethylamin, Diethylmethylamin, Anilin, Toluidin, alkoxylierte Amine, wie z.B. Ethanolamin, Diethanolamin, Triethanolamin, Methyldiethanolamin, Oleyldiethanolamin sowie polyfunktionelle Amine, bei denen die einzelnen Aminogruppen gegebenenfalls unterschiedliche Basizität aufweisen können, wie z.B. N,N-Dimethylethylendiamin, $\alpha$-Aminopyridin, N,N-Dimethylhydrazin, wobei Amine mit einem Siedepunkt von kleiner als 120°C wie z.B. Trimethylamin, Triethylamin, bevorzugt sind;

2. anorganische Basen, basisch reagierende oder basenabspaltende Verbindungen wie Ammoniak, einwertige Metallhydroxide, -carbonate und -oxide, wie Natriumhydroxid, Kaliumhydroxid; bevorzugte Verbindungen sind Ammoniak, Kaliumhydroxid und Natriumhydroxid.

Im Rahmen der Erarbeitung des erfindungsgemässen Verfahrens hat es sich ebenfalls als vorteilhaft herausgestellt, wenn die strahlungshärtbaren wässrigen Bindemitteldispersionen mit nichtstrahlungshärtbaren wässrigen Bindemitteldispersionen kombiniert werden. Im allgemeinen eignen sich hierfür Mischungen aus 40 bis 95% strahlungshärtbare und 5 bis 60% nichtstrahlungshärtbare Dispersionen.

Die Herstellung der magnetischen Aufzeichnungsträger erfolgt in allgemein üblicher Weise.

Als Magnetpigmente können die an sich bekannten verwendet werden, die die Eigenschaften der resultierenden Magnetschichten natürlich mitbestimmen. Als geeignete Magnetpigmente seien beispielhaft genannt:

Gamma-Eisen(III)-oxid, feinteiliger Magnetit, ferromagnetisches undotiertes oder dotiertes Chromdioxid, kobaltdotiertes Gamma-Eisen(III)-oxid sowie ferromagnetische Metalle und Metallegierungspigmente, wie Legierungen aus Eisen und Kobalt (z.B. hergestellt nach den Angaben in der deutschen Patentschrift 12 47 026). Bevorzugte Magnetpigmente sind nadelförmiges Gamma-Eisen(III)-oxid sowie ferromagnetisches Chromdioxid. Die Teilchengrösse beträgt im allgemeinen 0,2 bis 2 $\mu$m, bevorzugt ist der Bereich von 0,3 bis 0,8 $\mu$m.

In an sich bekannter Weise können die Magnetschichten ferner in kleinen Mengen Zusätze wie Dispergiermittel und/oder Gleitmittel, aber auch Füllstoffe enthalten, die bei der Dispergierung der Magnetpigmente oder bei der Herstellung der Magnetschicht zugemischt werden. Beispiele solcher Zusätze sind Fettsäuren oder isomerisierte Fettsäuren, wie Stearinsäure oder deren Salze mit Metallen der ersten bis vierten Hauptgruppe des Periodensystems der Elemente, amphotere Elektrolyte, wie Lecithin sowie Fettsäureester oder Wachse, Silikonöle, Russ usw. Besonders zweckmässig ist ein Dispergiermittel das hergestellt wird aus 25 bis 85% eines Polyetheracrylats mit 2 bis 10 Ethergruppen pro Doppelbindung und 15 bis 75% Acrylsäure oder Methacrylsäure. Die Menge der Zusätze ist die an sich übliche, sie liegt im allgemeinen unter 10 Gew.-%, bezogen auf die Magnetschicht.

Das Verhältnis von Magnetpigment zu Bindemittel in den erfindungsgemässen Aufzeichnungsmaterialien liegt im allgemeinen zwischen 1 bis 10 und insbesondere 3 bis 6 Gew.-Teilen Magnetpigment zu einem Gew.-Teil des Bindemittels bzw. Bindemittelgemisches. Es ist ein besonderer Vorteil, dass aufgrund des vorzüglichen Pigmentbindevermögens der wässrigen Bindemitteldispersionen hohe Magnetpigmentkonzentrationen in den Magnetschichten möglich sind, ohne dass die mechanischen Eigenschaften verschlechtert werden oder die Anwendungseigenschaften merklich in Mitleidenschaft gezogen werden.

Als nichtmagnetische und nichtmagnetisierbare Träger lassen sich die üblichen starren oder flexiblen Trägermaterialien verwenden. Insbesondere Folien aus linearen Polyestern, wie Polyethylenterephthalat, im allgemeinen in Stärken von 4 bis 200 µm und insbesondere von 6 bis 36 µm. In neuerer Zeit ist auch die Anwendung von Magnetschichten auf Papierträgern für Zwecke der mittleren Datentechnik bedeutend geworden; auch hierfür lassen sich die erfindungsge-mässen Beschichtungsmassen vorteilhaft ver-wenden.

Zur Herstellung der magnetischen Aufzeichnungsträger wird in einer Dispergiermaschine, z.B. einer Stahlkugelmühle oder einer Rührwerksmühle, aus dem Magnetpigment und der wässrigen Bindemitteldispersion unter Zusatz von Dispergiermitteln und anderen Zusätzen eine **Magnetpigmentdispersion hergestellt**, filtriert und mit der üblichen Beschichtungsmaschine, z.B. mittels eines Linealgiessers, auf den Träger aufgetragen. In der Regel erfolgt eine magnetische Ausrichtung, bevor die flüssige Beschichtungsmischung auf dem Träger getrocknet wird; letzteres geschieht zweckmässigerweise während 2 bis 5 Minuten bei Temperaturen von 60 bis 120°C. Die Magnetschichten werden dann auf üb-lichen Maschinen durch Hindurchführen zwi-schen geheizten und polierten Walzen, ggf. bei Anwendung von Druck und Temperatur von 50 bis 100°C, vorzugsweise 60 bis 80°C, geglättet und verdichtet. Die Dicke der Magnetschicht beträgt im allgemeinen 0,5 bis 20 µm, vorzugsweise 1 bis 10 µm. Zur Härtung werden die Magnetschichten anschliessend kurzzeitig einer UV-oder energiereichen Elektronenstrahlung ausgesetzt. Hierzu werden die üblicherweise für die Härtung von Überzügen eingesetzten UV- bzw. Elektronenstrahlungsquellen verwendet, wie z.B. beschrieben in UV Curing: Science and Technology, Editor: S. Peter Pappas, Technology Marketing Corporation, Stanford, USA, 1978, und Atomic Radiation and Polymers, Charlesby, Pergamon Press, 1960.

Diese erfindungsgemäss hergestellten magnetischen Aufzeichnungsträger besitzen gegenüber solchen, welche mit dem Stand der Technik entsprechenden Bindemitteln hergestellt sind, eine verbesserte Homogenität der Magnetschicht und aufgrund dieser sowohl gleichmässigen wie auch homogenen Magnetschicht ein deutlich verringertes Fehlerniveau. Zusätzlich muss noch die verbesserte Verschleissfestigkeit und die verrin-gerte Empfindlichkeit gegen Feuchtigkeitsein-fluss der erfindungsgemäss hergestellten ma-gnetischen Aufzeichnungsträger hervorgehoben werden. Diese Vorteile lassen sich zudem noch mit einem Bindemittelsystem erreichen, bei dem die bekannten Nachteile und Risiken beim Einsatz von organischen Lösungsmitteln vermieden werden. Weitere Vorteile des erfindungsgemässen Verfahrens liegen in der hohen Thermoplastizität der speziellen eingesetzten Bindemittel vor der Härtung, wodurch sich gute Filme, d.h. eine ausgezeichnete Oberfläche der Schicht herstellen lassen, deren mechanische Festigkeit sich durch die abschliessende Härtung noch wesentlich verbessern lässt.

Beispiel A

300 g eines Polyesters mit einem Molekulargewicht 1000, hergestellt aus Adipinsäure und Butandiol-1,4, wurden zusammen mit 22,5 g Butandiol-1,4, 3,47 g Trimethylpropan, 262 g Bisphenol A-Diglycidylether-diacrylat (gelöst in 112 g Aceton) und 350 g 4,4'-Diphenylmethandiisocyanat in 821 g Tetrahydrofuran gelöst und nach Zugabe von 1,88 g 2,6-Ditertiärbutyl-4-methylphenol und 15 Tropfen Dibutylzinndilaurat solange bei 60°C gerührt bis der NCO-Gehalt 1,6% betrug. Nun wurde innerhalb von 2 Minuten eine Mischung aus 69 g Mercaptoessigsäure (80%ig), 60,6 g Triethylamin und 31,2 g Wasser zugegeben. Nach einer Reaktionszeit von 30 Minuten wurden dann 1600 g Waser zugesetzt und das organische Lösungsmittel destillativ entfernt, so dass eine stabile Dispersion entstand.

Beispiel B

208 g eines Polycaprolactons mit einer OH-Zahl von 135 wurden zusammen mit 135 g Butandiol-1,4, 183, Bisphenol A-Diglycidylether-diacrylat (gelöst in 75 g Aceton) und 181,3 g 4,4'-Diphenylmethandiisocyanat in 512 g Tetrahydrofuran gelöst und nach Zugabe von 0,12 g 2,6-Ditertiärbu-tyl-4-methylphenol und 20 Tropen Dibutylzinndilaurat solange bei 60°C gerührt bis der NCO-Gehalt 0% betrug. Nun wurde innerhalb von 2 Minuten eine Mischung aus 29 g Mercaptoessigsäure (80%ig), 25 g Triethylamin und 13 g Aceton zugegeben. Nach einer Reaktionszeit von 30 Minuten wurden dann 900 g Wasser zugesetzt und das organische Lösungsmittel destillativ entfernt, so dass eine stabile Dispersion entstand.

Beispiel C

300 g eines Polyesters mit einem Molekulargewicht 1000, hergestellt aus Adipinsäure und Butandiol-1,4, wurden zusammen mit 22,5 g Butandiol-1,4, 4,47 g Trimethylpropan, 262 g Bisphenol A-Diglycidylether-diacrylat (gelöst in 112 g Aceton) und 350 g 4,4'-Diphenylmethandiisocyanatin 821 g Tetrahydrofuran gelöst und nach Zugabe von 1,88 g 2,6-Ditertiärbutyl-4-methylphenol und 15 Tropen Dibutylzinndilaurat solange bei 60°C gerührt bis der NCO-Gehalt 1,6% betrug. Nun wurde innerhalb von 2 Minuten eine Mischung aus 115 Mercaptoessigsäure (80%ig), 101 g Triethylamin und 52 g Aceton zugegeben. Nach einer Reaktionszeit von 30 Minuten wurden dann 1600 g Wasser zugesetzt und das organische Lösungsmittel destillativ entfernt, so dass eine stabile Dispersion entstand.

Beispiel 1

In einer Kugelmühle mit einem Volumen von 30 l und gefüllt mit 40 kg Stahlkugeln von 4 bis 6 mm Durchmesser wurden 6000 Teile eines $\alpha$-$Fe_2O_3$ und einer Koerzitivfeldstärke von 26,5 kA/m in einer ammoniakalisch-wässrigen Lösung aus 400 Teilen 30%igem Natriumpolyacrylat, 150 Teilen einer 20%igen Lösung von Natriumpolyphosphat, 50 Teilen 10%igem Ammoniak, 45 Teile eines handelsüblichen Dispergierhilfsmittels auf der Basis der Salze von Fettsäuren und 3750 Teilen Wasser 40 Stunden lang dispergiert.

Dazu wurden dann 3750 Teile der Bindemitteldispersion gemäss Beispiel A gegeben und weitere 30 Minuten dispergiert.

Mit der so erhaltenen Magnetmaterial-Dispersion wird nach dem Filtrieren durch einen Papierfilter mit einer Porenweite von 5 μm mittels eines üblichen Linealgiessers eine Polyethylenterephthalatfolie von 12 μm Dicke beschichtet. Vor der Trocknung bei 80 bis 120°C wird die beschichtete Folie zur Ausrichtung der Gamma-Eisen(III)oxid-Teilchen durch ein homogenes Magnetfeld geführt. Danach erfolgt noch eine Glättung der Schicht durch Kalandrieren bei 60°C und 23 N/mm² Liniendruck. Die Dicke der Magnetschicht beträgt 5,0 ± 0,3 μm. Die beschichtete Folie wird anschliessend in einer Elektronenstrahlanlage (Beschleunigungsspannung 160 kV) mit einer Aushärtungsdosis von 7 Grad gehärtet.

Die elektroakustischen Werte der in 3,81 mm Breite geschnittenen Bänder entsprechen der IEC-Norm. Die Ergebnisse der mechanischen Messungen gemäss nachfolgender Tests sind in der Tabelle angegeben.

## Test 1

Reinigungskoeffizient Schicht/Stahl, vor/nach Dauerlauf

Die Bestimmung der Reibungszahlen erfolgt nach DIN 45 522, Blatt 1. Die Reibungskoeffizienten werden am unbenutzen Band und am durch Dauerlauf benutzten Band gemessen.

## Test 2

Quasistatische Reibung

Die Reibungszahl wird durch Messen einer Zugkraft bestimmt, die ein über eine feststehende Messtrommel geführtes Magnetband durch Reibung erzeugt. Die Messtrommel ist eine Stahltrommel mit einer Oberflächenrauhigkeit von ca. 0,15 μm und einem Durchmesser von 70 mm. Das Bandstück ist 25 cm lang und wird bei einem Bandzug von 20 cN mit einer Geschwindigkeit von 1 mm/sec und einem Umschlingungswinkel von 180°C über die Trommel geführt. Der Zug an der Messdose F ist ein Mass für die Reibungszahl μ und zwar nach

$$\mu = \frac{1}{\pi} \cdot \ln \frac{F}{20}$$

## Test 3

Dynamische Reibung

Die Reibungszahl hierfür wird entsprechend dem Verfahren nach Test 2 gemessen, mit dem Unterschied, dass sich die Messtrommel mit einer Geschwindigkeit von 9,5 cm/sec dreht.

## Test 4

Dauerlauf-Abrieb

Mit dieser Messung werden die Abriebeigenschaften eines Bandes beurteilt. Es wird der Abrieb in Form des Gewichtsverlustes einer Bandschleife in mg gemessen. Dabei beträgt die Schleifenlänge 95 cm, die Bandgeschwindigkeit 4 m/sec, der Bandzug 35 cN und die Laufzeit 1 Stunde, bei einer Umgebungstemperatur von 23°C und einer rel. Luftfeuchte von 50%.

## Beispiel 2

Es wurde wie in Beispiel 1 beschrieben verfahren, jedoch wurde anstelle der Bindemitteldispersion gemäss Beispiel A eine solche gemäss Beispiel B eingesetzt. Die Prüfungsergebnisse sind in der Tabelle angegeben.

## Vergleichsversuch

Es wurde wie in Beispiel 1 beschrieben verfahren, jedoch wurde anstelle der Bindemitteldispersion gemäss Beispiel A eine solche gemäss Beispiel C eingesetzt. Beim Einsatz dieses Bindemittels unterbleibt auch die Strahlungshärte der Magnetschicht. Die Prüfergebnisse sind in der Tabelle angegeben.

### Tabelle

|  | Beispiel 1 | Beispiel 2 | Beispiel 3 |
|---|---|---|---|
| Schichtstärke [μm] | 5,2 | 5,7 | 5,5 |
| Test 1 | 0,24/0,26 | 0,22/0,45 | 0,44/0,60 |
| Test 2 | 0,13 | 0,12 | 0,14 |
| Test 3 | 0,30 | 0,24 | 0,36 |
| Test 4 | 0,1 | 0,1 | 0,2 |

## Patentansprüche

1. Verfahren zur Herstellung schichtförmiger magnetischer Aufzeichnungsträger durch Dispergieren eines feinteiligen magnetisch anisotropen Materials in einem Bindemittel, das zu mindestens 40% aus einer strahlungshärtbaren wässrigen Bindemitteldispersion besteht, Auftragen der Dispersion auf ein nichtmagnetisches Trägermaterial, Ausrichten des magnetisch anisotropen Materials und Trocknen und Vernetzen der aufgetragenen Schicht dadurch gekennzeichnet, dass die strahlungshärtbare wässrige Bindemitteldispersion im wesentlichen besteht aus

(A) 5 bis 80 Gew.-% Wasser und
(B) 95 bis 20 Gew.-% eines in (A) dispergierten polymerisierbaren Thioetheraddukts eines polymerisierbaren Oligo- oder Polymeren, das ein mittleres Molekulargewicht von mindestens 350, einen Salzgruppengehalt von 0,4 bis 12% und einen Gehalt von 0,01 bis 0,8 Mol polymerisierbarer C–C-Doppelbindungen pro 100 g Oligo- bzw. Polymer ausweist, wobei der vernetzte unpigmentierte Polymerfilm eine Dehnung von grösser 10%, eine Reisskraft von grösser 10 N/mm² und einen E-Modul von grösser 100 N/mm² aufweist.

2. Verfahren gemäss Anspruch 1, dadurch gekennzeichnet, dass die Komponente (B) durch Addition von Mercaptocarbonsäuren an nicht wasserlösliche polymerisierbare Oligo- oder Polymere, die mindestens zwei C-C-Doppelbindungen pro Molekül enthalten, erhalten wird.

3. Verfahren gemäss Anspruch 1, dadurch gekennzeichnet, dass die Komponente (B) durch Addition von sekundären Aminen an nicht wasserlösliche polymerisierbare Oligo- oder Polymere, die mindestens zwei C-C-Doppelbindungen pro Molekül enthalten, erhalten wird.

4. Verfahren gemäss Anspruch 1, dadurch gekennzeichnet, dass als nicht wasserlösliche Oligo- oder Polymere zur Herstellung der Komponente (B) durch Einführung von α- und/oder β-ethylenisch ungesättigten Acrylresten in ein Acrylatpolymer erhaltene Umsetzungsprodukte verwendet werden.

5. Verfahren gemäss einem der Ansprüche 2 und 3, dadurch gekennzeichnet, dass als Oligo- oder Polymeres zur Herstellung der Komponente (B) ein gegebenenfalls Harnstoffgruppen enthaltendes Polyurethan(meth)-acrylat verwendet wird.

6. Verfahren gemäss Anspruch 1, dadurch gekennzeichnet, dass die Komponente (B) ein Thioetheraddukt mit einem Molekulargewicht zwischen 1000 und 50.000, einem Carboxylgruppengehalt zwischen 0,5 und 16% und einem Gehalt von 0,01 bis 0,5 Mol Doppelbindungen in 100 g Addukt ist, das durch Umsetzung eines gegebenenfalls Harnstoffgruppen enthaltenden Urethanacrylats mit Mercaptocarbonsäuresalzen erhalten worden ist.

7. Verfahren gemäss Anspruch 1, dadurch gekennzeichnet, dass als polymerisierbare Oligo- oder Polymere zur Herstellung der Komponente (B) polymerisierbare C-C-Doppelbindungen enthaltende Polyether verwendet werden.

8. Verfahren gemäss Anspruch 1, dadurch gekennzeichnet, dass als Oligo- oder Polymere zur Herstellung der Komponente (B) hydroxylgruppenhaltige Umsetzungsprodukte aus einem mindestens zwei Epoxidgruppen pro Molekül enthaltenden Polyepoxid mit mindestens einer α- und/oder β-ethylenisch ungesättigten Carbonsäure verwendet werden.

9. Verfahren gemäss Anspruch 1, dadurch gekennzeichnet, dass die Komponente (B) zu 40 bis 95% aus strahlungshärtbarer Dispersion und zu 5 bis 60% aus nicht strahlungshärtbarer Dispersion besteht.

## Claims

1. A process for the production of a layer-type magnetic recording medium by dispersing a finely divided magnetically anisotropic material in a binder which consists of not less than 40% of a radiation-curable aqueous binder dispersion, applying the dispersion onto a non-magnetic base, orienting the magnetically anisotropic material and drying and crosslinking the applied layer, wherein the radiation-curable aqueous binder dispersion essentially consists of
(A) from 5 to 80% by weight of water and
(B) from 95 to 20% by weight of a polymerizable thioether adduct of a polymerizable oligomer or polymer which is dispersed in (A) and has a mean molecular weight of not less than 350, a content of salt groups of from 0.4 to 12% and a content of from 0.01 to 0.8 mole of polymerizable C-C double bonds per 100 g of oligomer of polymer, the crosslinked unpigmented polymer film having an elongation greater than 10%, a tensile strength greater than 10 N/mm² and a modulus of elasticity greater than 100 N/mm².

2. A process as claimed in claim 1, wherein the component (B) is obtained by an addition reaction of a mercaptocarboxylic acid with a water-insoluble polymerizable oligomer or polymer which contains two or more C-C double bonds per molecule.

3. A process as claimed in claim 1, wherein the component (B) is obtained by an addition reaction of a secondary amine with a water-insoluble polymerizable oligomer or polymer which contains two or more 2 C-C double bonds per molecule.

4. A process as claimed in claim 1, wherein a reaction product obtained by introducing α- and/or β-ethylenically unsaturated acrylyl radicals into an acrylate polymer is used as the water-insoluble oligomer or polymer for the preparation of component (B).

5. A process as claimed in either of claims 2 and 3, wherein a polyurethane (meth)acrylate which may or may not contain urea groups is used as the oligomer of polymer for the preparation of component (B).

6. A process as claimed in claim 1, wherein component (B) is a thioether adduct which has a molecular weight of from 1,000 to 50,000, a carboxyl content of from 0.5 to 16% and a content of from 0.01 to 0.5 mole of double bonds per 100 g of adduct and is obtained by reacting a urethane acrylate, which may or may not contain urea groups, with a salt of a mercaptocarboxylic acid.

7. A process as claimed in claim 1, wherein a polyether containing polymerizable C-C double bonds is used as the polymerizable oligomer or polymer for the preparation of component (B).

8. A process as claimed in claim 1, wherein a hydroxyl-containing reaction product of a polyepoxide containing two or more epoxide groups per molecule with one or more α- and/or β-ethylenically unsaturated carboxylic acids is used as the oligomer or polymer for the preparation of component (B).

9. A process as claimed in claim 1, wherein component (B) consists of from 40 to 95% of a radiation-curable dispersion and from 5 to 60% of a dispersion which is not radiation-curable.

## Revendications

1. Procédé de préparation de supports d'enregistrement en forme de couche, par dispersion d'un matériau magnétiquement anisotrope, finement réparti, dans un liant, qui est constitué d'au moins 10% d'une dispersion de liant aqueuse durcissable par radiation, application de la dispersion sur un matériau support non magnétique, alignement du matériau magnétiquement anisotrope et séchage et réticulation de la couche appliquée, caractérisé par le fait que la dispersion de liant aqueuse, durcissable par radiation, est constitué essentiellement de

(A) 5 à 80% en poids d'eau et

(B) 95 à 20% en poids d'un produit d'addition par thioether polymérisable, dispersible dans (A), d'un oligo- ou polymère polymérisable, qui possède un poids moléculaire moyen d'au moins 350, une teneur en groupes sel de 0,4 à 12% et une teneur de 0,01 à 0,8 mole de doubles liaisons C–C polymérisables par 100 g d'oligo- ou polymère le film de polymère non pigmenté, réticulé, présentant un allongement supérieur à 10%, une résistance à la déchirure supérieure à 10 N/mm² et un module E supérieur à 100 N/mm².

2. Procédé selon la revendication 1, caractérisé par le fait que le composant B est obtenu par addition d'acides mercaptocarboxyliques à des oligo- ou polymères polymérisables, non solubles dans l'eau, qui contiennent au moins deux doubles liaisons C–C par molécule.

3. Procédé selon la revendication 1, caractérisé par le fait que le composant (B) est obtenu par addition d'amines secondaires à des oligo- ou polymères polymérisables, non solubles dans l'eau, qui contiennent au moins deux doubles liaisons C–C par molécule.

4. Procédé selon la revendication 1, caractérisé par le fait que, comme oligo- ou polymère non soluble dans l'eau pour la préparation du composant (B), on utilise des produits de réaction obtenus par introduction de restes acryle insaturés éthyléniquement en α et/ou β dans un polymère d'acrylate.

5. Procédé selon l'une des revendication 2 et 3, caractérisé par le fiat que, comme oligo- ou polymère pour la préparation du composant (B), on utilise un polyuréthane (meth)acrylate, contenant éventuellement des groupes urée.

6. Procédé selon la revendication 1, caractérisé par le fait que le composant (B) est un produit d'addition de thioether, d'un poide moléculaire comprie entre 1000 et 50 000, une teneur en groupes carboxyle compris entre 0,5 et 16% et une teneur de 0,01 à 0,5 mole de doubles liaisons dans 100 g de produit d'addition, qui a été obtenu par réaction d'un uréthane-acrylate, contenant éventuellement des groupes urée, avec des sels d'acides mercaptocarboxyliques.

7. Procédé selon la revendication 1, caractérisé par le fait que, comme oligo- ou polymère polymérisable pour préparer le composant (B), on utilise des polyéthers contenant des doubles liaisons C–C polymérisables.

8. Procédé selon la revendication 1, caractérisé par le fait que, comme oligo- ou polymère polymérisable pour préparer le composant (B), on utilise des produits de réaction, à groupes hydroxyle, d'un polyépoxyde contenant au moins deux groupes éypoxyde par molécule avec au moins un acide carboxylique insaturé éthyléniquement en α et/ou β.

9. Procédé selon la revendication 1, caractérisé par le fait que le composant (B) est constitué, pour 40 à 95%, de dispersion durcissable par radiation et, pour 5 à 60%, de dispersion non durcissable par radiation.